# EUROPÄISCHE PATENTSCHRIFT

(11) **EP 1 414 289 B1**
(45) Veröffentlichungstag und Bekanntmachung des Hinweises auf die Patenterteilung: **06.04.2005**
(21) Anmeldenummer: 01967252.6
(22) Anmeldetag: 09.08.2001
(51) Int. Cl.: A01K 1/00, A01K 1/01

(54) **DEMONTIERBARES FERTIGTEIL-STALLGEBÄUDE**
DISMOUNTABLE PREFABRICATED STABLE
BATIMENT PREFABRIQUE ET DEMONTABLE POUR ELEVAGES

(43) Veröffentlichungstag der Anmeldung: 06.05.2004
(73) Patentinhaber: Durotec Stallbauelemente GmbH, 24755 Rendsburg (DE)
(72) Erfinder: MAIER, Wolfgang, 74595 Langenburg (DE)
(74) Vertreter: Bohnenberger, Johannes, Dr.
(86) Internationale Anmeldenummer: PCT/EP2001/009225
(87) Internationale Veröffentlichungsnummer: WO 2003/013230

(56) Entgegenhaltungen:
- EP-A- 0 858 736
- GB-A- 1 307 630
- NL-C- 1 013 514

## Beschreibung

Die Erfindung betrifft ein Fertigteil-Stallgebäude, welches insbesondere als Schweinestall oder Rinderstall dienen kann.

Unter Einsatz von Betonfertigteilen erstellte Stallgebäude sind bekannt.

Im Firmenprospekt "Ställe in kürzester Bauzeit" der Fa. Farmbau GmbH, 94595 Langenburg, DE, wird ein solches Stallgebäude beschrieben, welches unter Einsatz von Außenwandelementen mit innenliegender Dämmung - sog. Betonsandwichelementen -, Trennwandelementen und Güllekanalelementen montiert wird. Die Montage erfolgt auf einer Ortbeton-Bodenplatte, die bauseits in der erforderlichen Qualität erstellt werden muß, und das Gebäude wird mit einer herkömmlichen, in Zimmermannsarbeit vor Ort erstellten Dachkonstruktion überdacht. Ungeachtet des Einsatzes großformatiger Außenwandelemente ist zur Errichtung dieses Stallgebäudes ein relativ hoher Anteil qualifizierter bauseitiger Leistungen erfprderlich, was sich in relativ hohen Gestehungskosten niederschlägt.

Ein verbessertes Fertigteil-Stallgebäude, das insbesondere mit einem deutlich verringerten Volumen an bauseitigen Leistungen und zu wesentlich niedrigeren Kosten erstellt werden kann wird in der WO 01/35730 der Anmelderin beschrieben. Dieses Stallgebäude kann auf einfachen Streifenfundamenten erstellt werden und umfaßt integrale Außenwand-Boden-Innenwand-Elemente in selbsttragender Bauweise. Derartige Fertigteile können auf der Baustelle ohne größeren manuellen Arbeitsaufwand und besondere Qualifikation der Monteure auf den Streifenfundamenten aneinander gereiht werden.

Für Standorte, die von einer entwickelten Infrastruktur zur Herstellung von großvolumigen Betonfertigteilen weit entfernt sind und bei denen gegebenenfalls zusätzlich nur unzureichende Verkehrswege zur Verfügung stehen, erfordert die Realisierung eines solchen Stallkonzeptes jedoch einen großen logistischen Aufwand und ist mit sehr hohen Transportkosten verbunden. Zudem ist an solchen Standorten vielfach kostengünstige qualifizierte Arbeitskraft verfügbar, so daß die Vorteile der sehr weitgehenden Vorfertigung des erwähnten Stallkonzeptes dort nur bedingt zum Tragen kommen.

Im übrigen ist in jüngster Zeit festzustellen, daß für vollständig aus Betonteilen gefertigte Stallgebäude in bestimmten Ländern und Regionen verstärkt Genehmigungsprobleme auftauchen, die insbesondere aus einer erhöhten Umweltsensibilität und landschaftsgestalterischen Überlegungen der Genehmigungsbehörden herrühren.

Der Erfindung liegt daher die Aufgabe zugrunde, ein verbessertes Fertigteil-Stallgebäude anzugeben, welches hinsichtlich des Boden- und Wandaufbaus eine ausgeprägte Flexibilität und Anpaßbarkeit an lokale Bedingungen aufweist und im übrigen einer erhöhten Umweltsensibilität Rechnung trägt.

Die Aufgabe wird durch ein demontierbares Fertigteil-Stallgebäude mit den Merkmalen des Anspruchs 1 gelöst.

Die Erfindung schließt den grundlegenden Gedanken einer flexiblen und damit optimal an unterschiedliche Infrastruktur-, Arbeitsmarkt- und Genehmigungsbedingungen anpaßbaren Kombination aus großvolumigen vorgefertigten Betonteilen im Bodenaufbau und verschiedenen möglichen Wandaufbauten ein. Sie schließt weiter den Gedanken ein, als zentrales Element des Bodenaufbaus im wesentlichen quaderförmig gestaltete Güllewannen in einer regulären Anordnung vorzusehen. Schließlich gehört zur Erfindung der Gedanke, die den Wandaufbau bildenden Elemente lösbar mit dem Bodenaufbau zu verbinden, um einen relativ leichten Rückbau des Stallgebäudes bei Beendigung des Nutzungszeitraumes sicherzustellen.

Mit diesen Gedanken wird den oben erwähnten Problemen und Aspekten in sinnreicher Kombination Rechnung getragen, ohne in einem entscheidenden Punkt - nämlich dem anspruchsvollen und zeit- und kostenaufwendigen Bodenaufbau - die Vorteile des Betonfertigteilbaus preiszugeben. Das Argument der leichten Rückbaubarkeit und damit landschaftsgestalterischen Unbedenklichkeit kann national oder regional Genehmigungsverfahren ebenso erleichtern wie der Umstand, daß nationale bzw. regionale Arbeitskräfte- und Materialressourcen sinnvoll in das Gesamtkonzept eingebunden werden können.

In einer ersten zweckmäßigen Ausführung, die insbesondere für Schweineställe geeignet ist, ist der Bodenaufbau im wesentlichen nur aus Beton-Güllewannen gebildet, und die Außen- und gegebenfalls Innenwände stehen insbesondere auf deren Seitenwänden. Unter dem Begriff "im wesentlichen nur" ist auch zu verstehen, daß beispielsweise eine zweispaltige Anordnung aus langgestreckt quaderförmigen Güllewannen mit einem geringen Abstand voneinander angeordnet ist, wobei über dem Zwischenraum später ein Mittelgang des Stalles ausgebildet wird.

In einer hierzu alternativen Ausführung ist der Bodenaufbau durch eine Kombination aus Beton-Güllewannen und Streifenfundamenten sowie diese miteinander verbindenden Bodenplatten gebildet. Dieser Bodenaufbau ist - speziell mit einer dreispaltigen Anordnung von längs gereihten Güllewannen in relativ großem Abstand zueinander - besonders für Rinderställe geeignet. Hierbei sind dann insbesondere zwischen den Güllewannen bzw. zwischen Güllewannen und Streifenfundamenten Stahlbetonplatten angeordnet, die Liegeboxen oder Futtertische des Stalles definieren. Dieser Aufbau wird den Spezifika der Rinderhaltung in besonderer Weise gerecht, und die erforderliche Stallgröße kann mit Betonfertigteilen (eben den Güllewannen) in noch vertretbarer Größe realisiert werden.

Zur Realisierung der lösbaren Verbindung zwischen dem Bodenund dem Wandaufbau sind die Wandelemente auf Seitenwände der Beton-Güllewanne oder Streifenfundamente bevorzugt im wesentlichen nur aufgesetzt und durch Eingriffs-Fixierungen in Art von Bohrung/Zapfen- oder Nut/Feder-Verbindungen in ihrer Position am Boden fixiert. Wahlweise kann auch eine Verschraubung mit dem Bodenaufbau vorgesehen sein.

Die vorgefertigten Güllewannen sind bevorzugt mit zwei Kanälen ausgestattet, die durch eine Güllekanalwand voneinander getrennt sind. Diese verläuft insbesondere parallel zu den Längswänden und ist einstückig mit den Querwänden und dem Boden der Güllewanne gebildet. An den Ecken sind bevorzugt stabilisierende Ankerelemente (Stahlanker) eingebettet, die die Widerstandsfähigkeit bei Transport und Montage und die Aufnahmefähigkeit für Lasten aus dem Wandaufbau oder aufgelegten Betonplatten wesentlich erhöhen.

Im Interesse einer leichteren Fertigung sind - ungeachtet der quaderförmigen Außengestalt - die Wandungen der Güllewannen im inneren geringfügig geneigt, und zwar derart, daß sie zum Boden hin dicker werden. Diese Ausführung bietet auch statische Vorteile, erlaubt aber insbesondere ein leichtes Entnehmen der fertigen Güllewanne aus einer Stahlform.

Der Wandaufbau ist - je nach den statischen Parametern der verwendeten Wandelemente - gegebenenfalls durch (insbesondere vertikal verlaufende) Stahlträger verstärkt. Diese sind mit dem Bodenaufbau bevorzugt lösbar verbunden, insbesondere mit in die Güllewannen-Wandung eingreifenden Ankerelementen. Dadurch wird die oben erwähnte leichte Rückbaubarkeit auch bei Stallkonstruktionen mit Stahlträger-Verstärkung gewahrt.

Für den Wandaufbau eignen sich grundsätzlich alle hinreichend dauerhaften und zugleich kostengünstigen Wandbauelemente, die für den Bau von Zweckgebäuden verfügbar und bewährt sind. Hervorzuheben ist hierbei zunächst der Einsatz von Betonfertigteilen auch als Wandelemente, wobei Außenwandelemente bevorzugt eine eingebettete Wärmedämmschicht (insbesondere aus kostengünstigem Styropor, gegebenenfalls aber auch aus organischen oder mineralischen Dämmstoffen) haben.

In Abhängigkeit von den nationalen oder regionalen Ressourcen ist in einer anderen Ausführung ein gemauerter Wandaufbau vorgesehen. Dieser ist insbesondere im bodennahen Bereich durch eine Ringgurtanordnung verstärkt und - im Interesse der erwähnten Rückbaubarkeit - vom Bodenaufbau bis zu einem gewissen Grade separiert. In einer anderen Ausführung werden als Wandelemente Aluminium- oder Stahl-Sandwichtrapezbleche eingesetzt, die an einer Stahlträger-Grundkonstruktion angebracht sind. Eine weitere Ausführung sieht stattdessen Faserzement-Sandwichplatten an Stahlträgern vor. Schließlich ist in holzreichen Gegenden ein Holz-Wandaufbau in Blockhausart oder in Form von Holz-Ständerwänden als leicht verfügbare und kostengünstige Lösung zu bevorzugen. Stahlträger werden hierbei nach den statischen Erfordernissen wahlweise eingesetzt.

Als Bedachung des vorgeschlagenen Stallgebäudes dienen insbesondere ebenfalls Fertigteile, und zwar speziell Aluminiumoder Stahl-Sandwichtrapezbleche. Diese können wahlweise auf die Außen- und Innenwandung oder eine zimmermannsmäßig gefertigte Unterkonstruktion aufgelegt sein. Im Bereich der Oberkante der Außenwände ist wahlweise eine Draufpfette als Auflage der Dachelemente vorgesehen.

Vorteile und Zweckmäßigkeiten der Erfindung ergeben sich im übrigen aus den Unteransprüchen sowie der nachfolgenden Beschreibung von Ausführungsbeispielen anhand der Figuren. Von diesen zeigen:
- Fig. 1: eine schematische Querschnittsdarstellung durch die Gebäudekonstruktion eines Rinderstalles gemäß einer Ausführungsform der Erfindung,
- Fig. 2A bis 7B: Detailansichten (Querschnitssdarstellungen in zwei verschiedenen Schittebenen) des Fundaments- und Landaufbaus verschiedener Stallgebäude gemäß Ausführungsformen der Erfindung
- Fig. 8A und 8B: eine schematische perspektivische Darstellung bzw. Draufsicht der Grundkonstruktion eines Schweinestalles gemäß einer weiteren Ausführungsform der Erfindung,
- Fig. 9: eine Draufsicht auf eine weitere erfindungsgemäße Stallkonstruktion und
- Fig. 10: eine perspektivische Darstellung eines Formteiles zur Herstellung einer als wesentliches Element des Bodenaufbaus der erfindungsgemäßen Stallkonstruktion dienenden monolihischen Güllewanne.

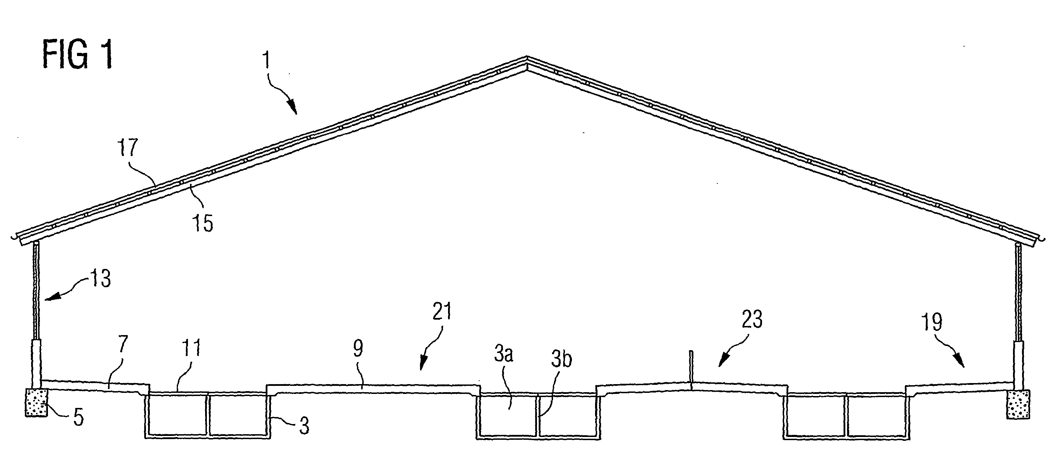

Fig. 1 zeigt einen Rinderstall 1, dessen Bodenaufbau drei monolihische, in relativ großem Abstand voneinander in den Boden eingelassene Güllewannen 3, ein Streifenfundament 5 sowie die Güllewannen 3 miteinander bzw. dem Streifenfundament 5 verbindende Beton-Bodenplatten 7, 9 umfaßt. Die Güllewannen 3 sind (in an sich bekannter Weise) mit Spaltenböden 11 abgedeckt. Der Wandaufbau der Rinderstalls 1 besteht aus sogenannten Spaceboards 13, und eine zimmermannsmäßig gefertigte Dachkonstruktion 15 ist mit Stahltrapez-Sandwichblech 17 gedeckt.

Durch die Bodenplatten 7, 9 in Zuordnung zu den Güllewannen 3 sind verschiedene Nützbereiche des Stalles definiert, und zwar Wandliegeboxen 19, Futtertische 21 und Doppelliegeboxen 23. Wie in der Figur zu erkennen ist, sind die Güllewannen 3 jeweils mit zwei durch eine bis zur Gesamthöhe reichende Trennwand 3b voneinander getrennten Güllekanälen 3a ausgeführt.

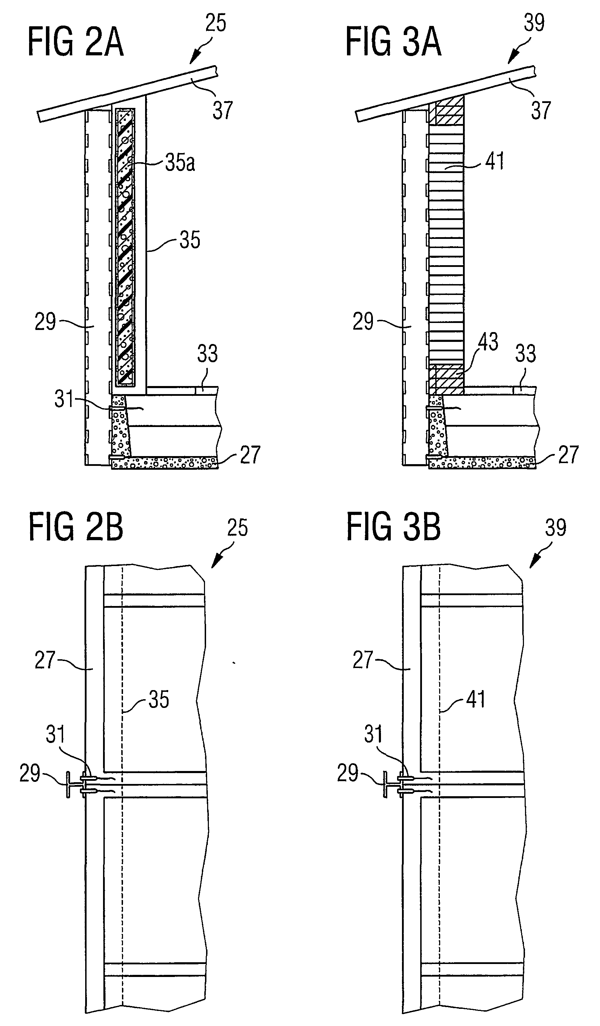

Fig. 2A und 2B zeigen in Querschnittsdarstellungen mit einer senkrechten bzw. einer waagrechten Schnittebene (letztere durch das Fundament) ein Beispiel eines erfindungsgemäßen Boden- und Wandaufbaus eines Stallgebäudes 25. Der Bodenaufbau umfaßt aneinandergereihte Güllewannen 27, und tragende Elemente des Wandaufbaus sind Stahlträger 29, die im Bodenbereich über Anker 31 an den Güllewannen 27 verankert sind. Die Güllewannen 27 sind auch hier durch Spaltenböden 33 abgedeckt. Die Außenwand besteht aus Stahlbeton-Sandwichelementen 35 mit eingebetteter Styropor-Wärmedämmung 35a. Das Dach ist auch hier mit Stahltrapez-Sandwichblech 37 gedeckt.

In den nachfolgenden Figuren 3A bis 7B werden, sofern die unter Bezugnahme auf Fig. 2A und 2B oben erwähnten Konstruktions- bzw. Bauelemente hier ebenfalls verwendet werden, diese mit denselben Bezugsziffern wie in Fig. 2A und 2B bezeichnet und nachfolgend nicht nochmals beschrieben. Insbesondere ist bei allen nachfolgend beschriebenen Stallgebäuden der Bodenaufbau derselbe wie bei der Ausführung nach Fig. 2A und 2B.

Stahlträger als tragende Elemente des Wandaufbaus sind bei einigen Ausführungen lediglich optional vorgesehen.

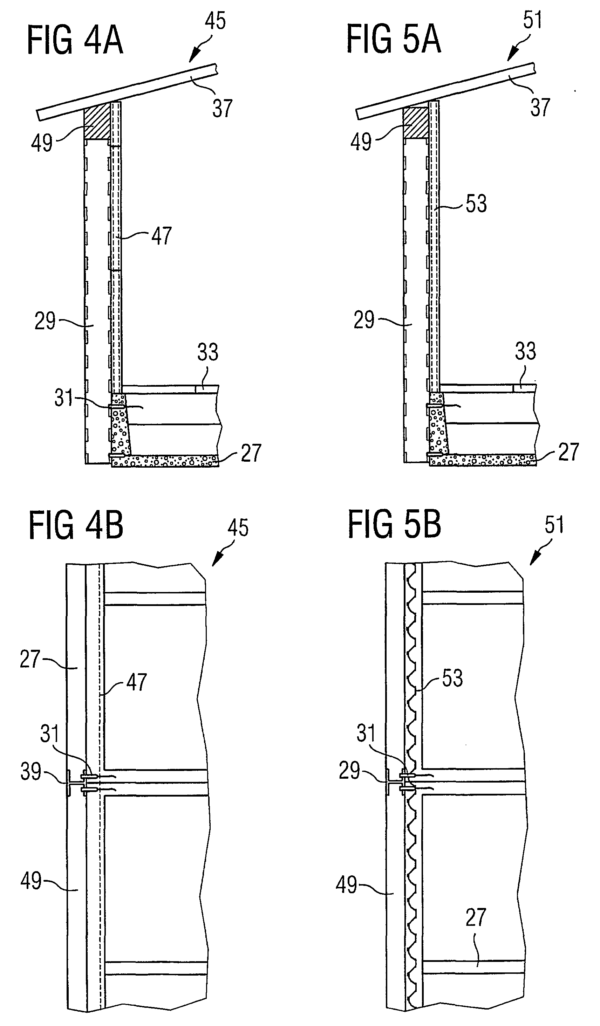

Beim Stallgebäude 39 nach Fig. 3A und 3B besteht die Außenwand im wesentlichen aus Mauerwerk 41, mit Ringgurten 43 im boden- und dachnahen Bereich. Beim Stallgebäude 45 nach Fig. 4A und 4B besteht die Außenhaut aus Aluminium- bzw. Stahlsandwich-Trapezblech 47. Es versteht sich, daß die Stahlträger 29 hier statisch unbedingt erforderlich sind. An der Oberkante der Außenhaut ist - wie auch bei den Stallkonstruktionen der nachfolgenden Figuren 5A bis 7B - eine Traufpfette als Auflage der Dachkonstruktion vorgesehen.

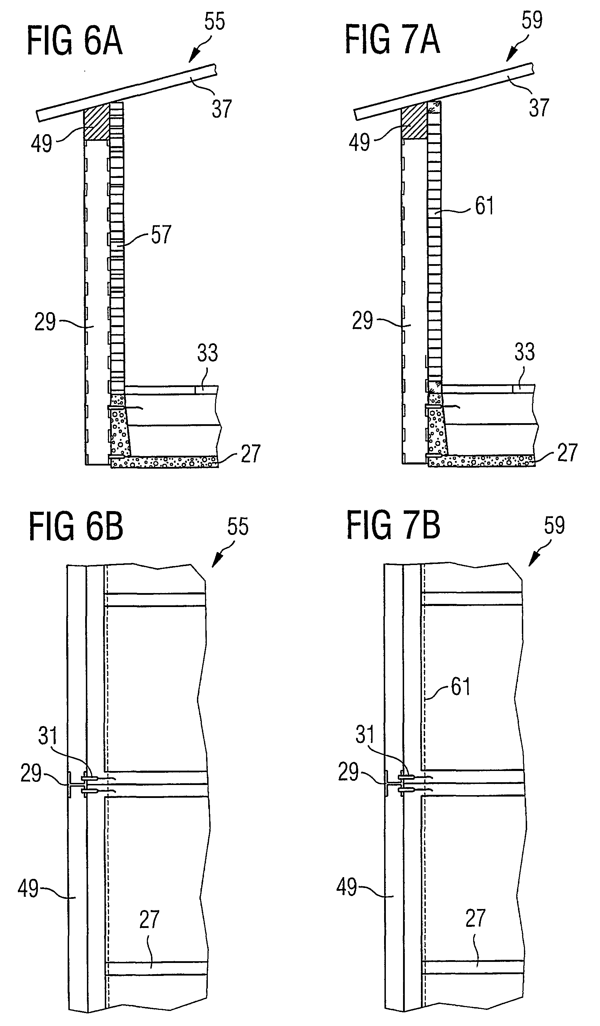

Der Aufbau des Stallgebäudes 51 nach Fig. 5A und 5B ist im wesentlichen identisch mit den des Stallgebäudes 45 nach Fig. 4A und 4B, mit der Ausnahme, daß die Außenhaut aus Faserzement-Sandwichplatten 53 besteht. Bei dem Stallgebäude 55 nach Fig. 6A und 6B besteht die Außenhaut - bei ansonsten gleichem Aufbau - aus einem Holz-Blockverbund (Blockhausaufbau) 57. Dieser kann selbsttragend sein, so daß die Stahlträger 29 hier optional vorgesehen sind. Bei dem Stallgebäude 59 nach Fig. 7A und 7B schließlich ist statt des Blockverbundes als Außenhaut eine Holz-Ständerwand 61 vorgesehen.

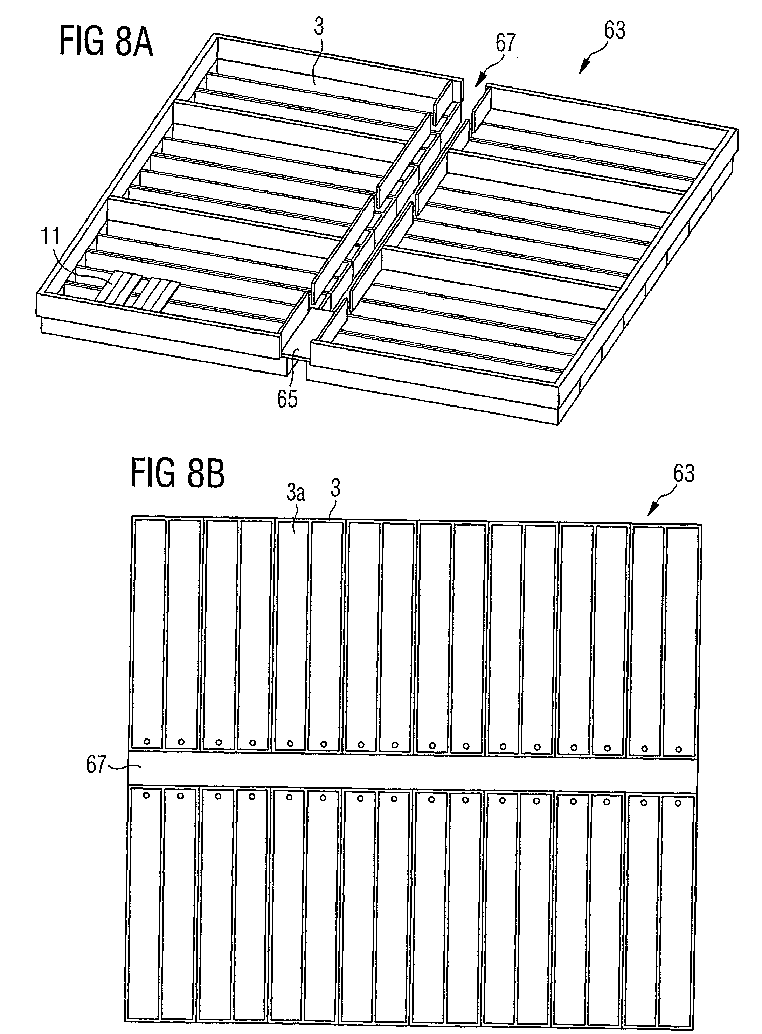

Fig. 8A und 8B zeigen schematisch die Grundkonstruktion eines Stallgebäudes 63 aus 16 Güllewannen 3 mit jeweils zwei Güllekanälen 3a als Modulen des Bodenaufbaus. Die Güllewannen 3 sind in zwei Spalten zu jeweils acht Güllewannen aneinandergereiht, wobei die beiden Spalten einen geringfügigen Abstand aufweisen, der mit Mittelgangplatten 65 abgedeckt wird und wo sich später der Mittelgang 67 des Stallgebäudes befindet. In Fig. 8A ist angedeutet, daß auch hier die Güllewannen 3 mit Spaltenböden 11 bedeckt sind. Außerdem ist hier zu erkennen, daß durch (nicht gesondert bezeichnende) Innenwände mit Türausschnitten mehrere unterschiedlich große Stallabteile gebildet sind. Ebenso wie die Außenwände ruhen die Innenwände auf Seitenwandungen der Güllewannen.

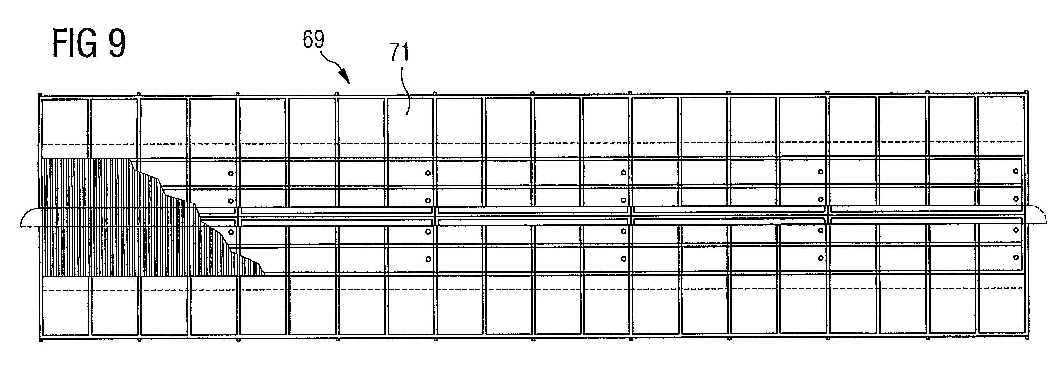

Fig. 9 zeigt einen Grundriß eines weiteren Stallgebäudes 69, welches unter Einsatz von vorgefertigten Güllewannen 71 zu errichten ist. Dieser Stall umfaßt zwei längs zur Stallachse angeordnete Modulreihen (Güllewannenreihen), wobei die Restfläche längs an den Außenwänden als "Festfläche" angeordnet ist, um den neuen Tierhaltungsauflagen gerecht zu werden.

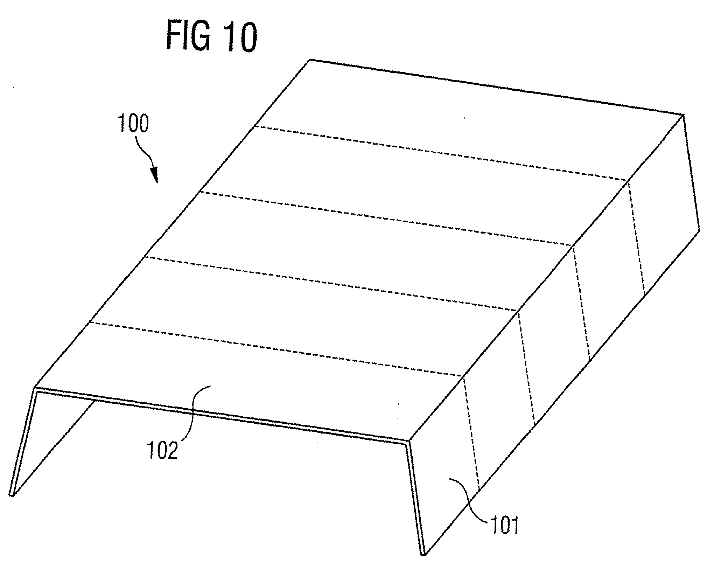

Fig. 10 zeigt ein in Querschnitt trapezförmiges Stahlblech-Formteil 100 zur Herstellung von Güllewannen der oben beschriebenen Art. Bei einer Höhe der Seitenwandungen 101 von ca. 500 mm ist in einer zweckmäßigen Ausführung die Breite eine der (offenen) Basis ca. 30 mm größer als diejenige der (geschlossenen) Deckfläche 102 des Trapezes. Diese Breite kann vorzugsweise im Bereich zwischen 1000 und 1500 mm liegen, und die Länge der Form kann bis zu 10 m betragen. Die skizzierte Formgebung ermöglicht ein leichtes Lösen des Formblechs von der fertig gegossenen Güllewanne und sichert einen statischen vorteilhaften Aufbau derselben.

### Bezugszeichenliste

- 1: Rinderstall
- 3; 27; 71: Güllewanne
- 3a: Güllekanal
- 3b: Trennwand
- 5: Streifenfundament
- 7; 9: Bodenplatte
- 11; 33: Spaltenboden
- 13: Spaceboard
- 15: Dachkonstruktion
- 17; 37: Stahltrapez-Sandwichblech
- 19: Wandliegebox
- 21: Futtertisch
- 23: Doppelliegebox
- 25; 39; 45; 51; 55; 59; 63; 69: Stallgebäude
- 29: Stahlträger
- 31: Anker
- 35: Stahlbeton-Sandwichelemenat
- 35a: Styropor-Wärmedämmung
- 41: Mauerwerk
- 43: Ringgurt
- 47: Aluminium- bzw. Stahlsandwich-Trapezblech
- 49: Traufpfette
- 53: Faserzement-Sandwichplatte
- 57: Holz-Blockverbund
- 61: Holz-Ständerwand
- 65: Mittelgangplatte
- 67: Mittelgang
- 100: Stahlblech-Formteil
- 101: Seitenwand
- 102: Deckfläche

## Patentansprüche

1. Demontierbares Fertigteil-Stallgebäude, dessen Bodenaufbau eine reguläre Anordnung von vorgefertigten selbsttragenden, annähernd quaderförmigen Beton-Güllewannen (3, 27, 71), insbesondere aus Stahlbeton, einschließt und dessen Wandaufbau im wesentlichen aus mit dem Bodenaufbau lösbar verbundenen Wandelementen (13, 35, 41, 47, 57, 61) besteht.

2. Fertigteil-Stallgebäude nach Anspruch 1,
**dadurch gekennzeichnet, daß**
der Bodenaufbau im wesentlichen ausschließlich aus Beton-Güllewannen (3, 27, 71) gebildet ist.

3. Fertigteil-Stallgebäude nach Anspruch 1,
**dadurch gekennzeichnet, daß**
der Bodenaufbau Beton-Güllewannen und Streifenfundamente (5) sowie auf diesen aufliegende und mit diesen verbundene Bodenplatten (7, 9), insbesondere aus Beton oder Stahlbeton, oder Spaltenböden einschließt.

4. Fertigteil-Stallgebäude nach einem der vorangehenden Ansprüche,
**dadurch gekennzeichnet, daß**
die reguläre Anordnung von Beton-Güllewannen (3, 27, 71) zwei- oder dreispaltig ausgebildet ist.

5. Fertigteil-Stallgebäude nach einem der vorangehenden Ansprüche,
**dadurch gekennzeichnet, daß**
die Wandelemente auf Seitenwände der Beton-Güllewannen (3, 27, 71) oder Streifenfundamente (5) aufgesetzt sind und durch Eingriffs-Fixierungen in Art von Bohrung/Zapfen- oder Nut/Feder-Verbindungen in ihrer Position fixiert und wahlweise verschraubt sind.

6. Fertigteil-Stallgebäude nach einem der vorangehenden Ansprüche,
**dadurch gekennzeichnet, daß**
mindestens ein Teil der Beton-Güllewannen eine parallel zu zwei Seitenwänden verlaufende, insbesondere einstükkig angeformte, Güllekanalwand (3b) aufweist.

7. Fertigteil-Stallgebäude nach einem der vorangehenden Ansprüche,
**dadurch gekennzeichnet, daß**
an den Ecken der Beton-Güllewannen stabilisierende Ankerelement (31) eingebettet sind.

8. Fertigteil-Stallgebäude nach einem der vorangehenden Ansprüche,
**dadurch gekennzeichnet, daß**
die Beton-Güllewannen (3) die äußere Gestalt eines Quaders aufweisen, die Wandung aber innen geringfügig geneigt ist derart, daß sie zum Boden hin dicker wird.

9. Fertigteil-Stallgebäude nach einem der vorangehenden Ansprüche,
**dadurch gekennzeichnet, daß**
der Wandaufbau durch Stahlträger (29) verstärkt ist, welche mit dem Bodenaufbau insbesondere durch Ankerelemente lösbar verbunden sind.

10. Fertigteil-Stallgebäude nach einem der vorangehenden Ansprüche,
**gekennzeichnet durch**
als Betonfertigteile ausgebildete Wandelemente (35), wobei Außenwandelemente eine eingebettete Wärmedämmschicht (35a) insbesondere aus Styropor, haben.

11. Fertigteil-Stallgebäude nach einem der Ansprüche 1 bis 9,
**gekennzeichnet durch**
als Mauerwerkswände (41) augebildete Außenwände, welche über eine Ringgurtanordnung (43) verstärkt auf dem Bodenaufbau ruhen.

12. Fertigteil-Stallgebäude nach einem der Ansprüche 1 bis 9,
**dadurch gekennzeichnet, daß**
der Wandaufbau Stahlträger (29) und an diesen befestigte Wandelemente aus Aluminium- oder Stahl-Sandwichtrapezblech (47) umfaßt.

13. Fertigteil-Stallgebäude nach einem der Ansprüche 1 bis 9,
**dadurch gekennzeichnet, daß**
der Wandaufbau Stahlträger und an diesen angebrachte Faserzement-Sandwichplatten (53) aufweist.

14. Fertigteil-Stallgebäude nach einem der Ansprüche 1 bis 9,
**dadurch gekennzeichnet, daß**
der Wandungsaufbau in Blockhausart aus Holz gefertigt ist.

15. Fertigteil-Stallgebäude nach einem der Ansprüche 1 bis 9,
**dadurch gekennzeichnet, daß**
der Wandungsaufbau durch Holz-Ständerwände (61) gebildet ist.

16. Fertigteil-Stallgebäude nach einem der vorangehenden Ansprüche,
**dadurch gekennzeichnet, daß**
der Wandungsaufbau an der Oberkante der Außenwände angebrachte Draufpfetten als Auflager einer vorgefertigten Dachaufbaus (15) aufweist.

17. Fertigteil-Stallgebäude nach einem der vorangehenden Ansprüche,
**gekennzeichnet durch**
einen Dachaufbau aus vorgefertigten Dachelementen, insbesondere Stahl-Sandwichtrapezblechen (17).

## Claims

1. A demountable prefabricated livestock building, the floor structure of which includes a regular arrangement of prefabricated self-supporting approximately parallelepipedal concrete slurry troughs (3, 27, 71), in particular consisting of reinforced concrete, and the wall structure of which consists substantially of wall elements (13, 35, 41, 47, 57, 61) releasably connected to the floor structure.

2. A prefabricated livestock building according to Claim 1, **characterised in that** the floor structure is formed substantially exclusively from concrete slurry troughs (3, 27, 71).

3. A prefabricated livestock building according to Claim 1, **characterised in that** the floor structure comprises concrete slurry troughs and strip foundations (5), as well as floor slabs (7,9) which are supported thereon and are connected thereto and which in particular consist of concrete or reinforced concrete, or comprises split floors.

4. A prefabricated livestock building according to any one of the preceding Claims, **characterised in that** the regular arrangement of concrete slurry troughs (3,27,71) is split two or three times.

5. A prefabricated livestock building according to any one of the preceding Claims, **characterised in that** the wall elements are mounted on side walls of the concrete slurry troughs (3,27,71) or strip foundations (5) and are secured in position by engagement fastenings of the bore-and-dowel or tongue-and-groove connection type and are optionally bolted together.

6. A prefabricated livestock building according to any one of the preceding Claims, **characterised in that** at least one part of the concrete slurry troughs has a slurry channel wall (3b) which, in particular formed integrally thereon, extends parallel to two side walls.

7. A prefabricated livestock building according to any one of the preceding Claims, **characterised in that** stabilising anchor elements (31) are embedded at the corners of the concrete slurry troughs.

8. A prefabricated livestock building according to any one of the preceding Claims, **characterised in that** the concrete slurry troughs (3) have the outer shape of a rectangular parallelepiped but the walls are slightly inclined internally so that they are thicker towards the base.

9. A prefabricated livestock building according to any one of the preceding Claims, **characterised in that** the wall structure is reinforced by steel beams (29) which are releasably connected to the floor structure, in particular by anchor elements.

10. A prefabricated livestock building according to any one of the preceding Claims, **characterised by** wall elements (35) in the form of precast concrete parts, wherein outer wall elements have an embedded thermal insulation layer (35a), in particular consisting of expanded polystyrene.

11. A prefabricated livestock building according to any one of Claims 1 to 9, **characterised by** outer walls which are in the form of brickwork walls (41) which are reinforced via an annular flange arrangement (43) on the floor structure.

12. A prefabricated livestock building according to any one of Claims 1 to 9, **characterised in that** the wall structure comprises steel beams (29) and walls elements which are fastened thereto and which consist of aluminium or steel sandwich trapezium-shaped sheet material (47).

13. A prefabricated livestock building according to any one of Claims 1 to 9, **characterised in that** the wall structure has steel beams and, attached thereto, fibrous cement sandwich panels (53).

14. A prefabricated livestock building according to any one of Claims 1 to 9, **characterised in that** the wall structure is fabricated from timber in the manner of a log cabin.

15. A prefabricated livestock building according to any one of Claims 1 to 9, **characterised in that** the wall structure is formed by timber post walls (61).

16. A prefabricated livestock building according to any one of the preceding Claims, **characterised in that** the wall structure has top purlins attached to the upper edge of the outer walls as supports of a prefabricated roof structure (15).

17. A prefabricated livestock building according to any one of the preceding Claims, **characterised by** a roof structure consisting of prefabricated roof elements, in particular steel sandwich trapezium-shaped sheets (17).

## Revendications

1. Bâtiment d'élevage préfabriqué démontable, dont la structure de sol comprend un agencement régulier de cuves à lisier préfabriquées autoportantes en béton (3, 27, 71), en particulier en béton armé, à peu près parallélépipédiques, et dont la structure de parois est constituée essentiellement d'éléments de paroi (13, 35, 41, 47, 57, 61) reliés de façon amovible à la structure de sol.

2. Bâtiment d'élevage préfabriqué suivant la revendication 1, **caractérisé en ce que** la structure de sol est formée sensiblement exclusivement de cuves à lisier en béton (3, 27, 71).

3. Bâtiment d'élevage préfabriqué suivant la revendication 1, **caractérisé en ce que** la structure de sol comprend des cuves à lisier en béton et des semelles filantes (5) ainsi que, reposant sur celles-ci et reliés à celles-ci, des dalles (7, 9), en particulier en béton ou béton armé, ou des caillebotis.

4. Bâtiment d'élevage préfabriqué suivant l'une des revendications précédentes, **caractérisé en ce que** l'agencement régulier de cuves à lisier en béton (3, 27, 71) est configuré en deux ou en trois colonnes.

5. Bâtiment préfabriqué en béton suivant l'une des revendications précédentes, **caractérisé en ce que** les éléments de paroi sont placés sur des parois latérales des cuves à lisier en béton (3, 27, 71) ou des semelles filantes (5) et sont fixés dans leur position parades fixations par pénétration à la manière d'assemblages alésage/tenon ou rainure/languette et sont vissés sélectivement.

6. Bâtiment d'élevage préfabriqué suivant l'une des revendications précédentes, **caractérisé en ce qu'**au moins une partie des cuves à lisier en béton présente une cloison de canaux à lisier (3b) s'étendant parallèlement à deux parois latérales, en particulier conformée d'une seule pièce.

7. Bâtiment d'élevage préfabriqué suivant l'une des revendications précédentes, **caractérisé en ce que** des éléments d'ancrage stabilisateurs (31) sont enrobés aux coins des cuves à lisier en béton.

8. Bâtiment d'élevage préfabriqué suivant l'une des revendications précédentes, **caractérisé en ce que** les cuves à lisier en béton (3) présentent la configuration extérieure d'un parallélépipède, mais que la paroi est légèrement inclinée intérieurement de telle sorte qu'elle devient plus épaisse en direction du fond.

9. Bâtiment d'élevage préfabriqué suivant l'une des revendications précédentes, **caractérisé en ce que** la structure de parois est renforcée par des profilés d'acier (29), qui sont reliés de façon amovible à la structure de sol, en particulier par des éléments d'ancrage.

10. Bâtiment d'élevage préfabriqué suivant l'une des revendications précédentes, **caractérisé par** des éléments de paroi (35) configurés sous forme d'éléments préfabriqués en béton, des éléments de paroi extérieure ayant une couche calorifuge (35a) enrobée, en particulier en polystyrène expansé.

11. Bâtiment d'élevage préfabriqué suivant l'une des revendications 1 à 9, **caractérisé par** des parois extérieures configurées sous forme de parois maçonnées (41), qui reposent de façon renforcée sur la structure de sol par l'intermédiaire d'un agencement de sangles annulaires (43).

12. Bâtiment d'élevage préfabriqué suivant l'une des revendications 1 à 9, **caractérisé en ce que** la structure de parois comprend des profilés d'acier (29) et, fixés sur ces derniers, des éléments de paroi en tôle trapézoïdale sandwich (47) en aluminium ou en acier.

13. Bâtiment d'élevage préfabriqué suivant l'une des revendications 1 à 9, **caractérisé en ce que** la structure de parois présente des profilés d'acier et des plaques sandwich en béton fibreux (53) montées sur ces derniers.

14. Bâtiment d'élevage préfabriqué suivant l'une des revendications 1 à 9, **caractérisé en ce que** la structure de parois est fabriquée à la manière d'une maison de rondins en bois.

15. Bâtiment d'élevage préfabriqué suivant l'une des revendications 1 à 9, **caractérisé en ce que** la structure de parois est formée par des parois de madriers (61).

16. Bâtiment d'élevage préfabriqué suivant l'une des revendications précédentes, **caractérisé en ce que** la structure de parois présente des sablières, montées sur le bord supérieur des parois extérieures, en tant que soutien d'une structure de toit (15) préfabriquée.

17. Bâtiment d'élevage préfabriqué suivant l'une des revendications précédentes, **caractérisé par** une structure de toit en éléments préfabriqués, en particulier en tôles trapézoïdales sandwich en acier (17).
